# EUROPÄISCHE PATENTSCHRIFT

(11) **EP 3 174 681 B1**
(45) Veröffentlichungstag und Bekanntmachung des Hinweises auf die Patenterteilung: **15.01.2020**
(21) Anmeldenummer: 15741140.6
(22) Anmeldetag: 14.07.2015
(51) Int. Cl.: B29C 33/68, C09J 7/22, C09J 7/24, C09J 7/38

(54) **VERFAHREN ZUM FORMEN EINES KÖRPERS IN EINER FORM**
METHOD FOR MOULDING A BODY IN A MOULD
PROCÉDÉ SERVANT À MOULER UN CORPS DANS UN MOULE

(30) Priorität: 31.07.2014 DE 102014215079
(43) Veröffentlichungstag der Anmeldung: 07.06.2017
(73) Patentinhaber: tesa SE, 22848 Norderstedt (DE)
(72) Erfinder: BERNT, Stephan, 22529 Hamburg (DE); KEREP, Patrick, 22767 Hamburg (DE)
(86) Internationale Anmeldenummer: PCT/EP2015/066065
(87) Internationale Veröffentlichungsnummer: WO 2016/015997

(56) Entgegenhaltungen:
- WO-A1-2015/014646
- DE-C1- 4 313 008
- FR-A1- 2 388 658

## Beschreibung

Die vorliegende Erfindung betrifft ein Verfahren zum Formen eines Körpers in einer Form, bei dem aus mehreren härtbaren Materialschichten ein Körper geformt wird, insbesondere ein Halbflügel eines Rotors, der in einer Windkraftanlage verbaut ist.

Viele Bauteile, teilweise mit komplexen geometrischen Strukturen, werden hergestellt, indem aushärtbares Material wie zum Beispiel Epoxid- oder Polyesterharze in eine Form eingebracht wird und das Material anschließend ausgehärtet wird.

Beispiele für solche Prozesse sind RTM (Resin Transfer Moulding) und VRTM (Vacuum-Assisted Resin Transfer Moulding). Das Resin Transfer Moulding ist ein Verfahren zur Herstellung von Formteilen aus Duroplasten und Elastomeren. Im Vergleich zum Pressen wird hierbei die Formmasse mittels Kolben von einer meist beheizten Vorkammer über Verteilerkanäle in das Formnest eingespritzt, worin sie unter Wärme und Druck aushärtet. Als Formmasse können Formaldehydharze (Phenolharze oder Aminoplaste) und Reaktionsharze (Polyester wie PET oder Epoxidharze) mit kleinen Füllstoffpartikeln und Elastomere verwendet werden.

Zu Beginn eines Zyklus befindet sich eine vorplastifizierte und dosierte Formmasse in der Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und -temperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Danach erfolgt die Reinigung des Werkzeugs und ein neuer Zyklus kann beginnen.

Die Menge der beim Einpressen und Nachpressen benötigen Formmasse sollte dabei immer größer als das Volumen des endgültigen Formteil sein, damit das Werkzeug vollständig befüllt wird. Somit wird garantiert, dass das Formteil vollständig ausgebildet ist und keine Luft eingepresst wird. Die dabei in der Vorkammer überschüssige, zurückgebliebene Formmasse, auch als Restkuchen bezeichnet, muss vor dem Beginn des neuen Zyklus entfernt werden und durch neue Formmasse ersetzt werden.

Um Lufteinschlüsse zu vermeiden, wird meist zusätzlich die Kavität (Formhohlraum) evakuiert.

Um auch lange Fasern oder Faserhalbzeuge (Prewovens/Preform) zu verarbeiten, werden diese zuvor in das Werkzeug eingelegt und mit der Formmasse umspritzt. Auch hier wird vorteilhafterweise meist zusätzlich die Kavität (Formhohlraum) evakuiert.

Die "Prewovens-Verfahren" lassen sich nach Anzahl und Gestaltung der Harzangüsse einteilen. Im Folgenden wird der Eintrag des Harzes in das Faser-Halbzeug als Injektion bezeichnet, unabhängig davon auf welche Weise der Druckgradient erzeugt wird.
- Punktinjektion: Das Harz wird nur an einer Stelle in das Halbzeug injiziert. Beim Punktanguss kann die Fließfront Luft einschließen, was zu Fehlstellen führt.
- Mehrpunktinjektion: Durch mehrere Injektionsstellen kann die Form schneller mit Harz gefüllt werden. Der Einschluss von Luft kann durch geschickte Positionierung verhindert werden.
- Linien-Injektion: Bei der Linieninjektion wird nicht an einer punktförmigen Stelle injiziert sondern linienhaft am Rand der Form. Dies kann bei Bauteilen mit großer Streckung von Vorteil sein, da nur die kürzere Kantenlänge durchströmt werden muss.
- Fließkanal-Injektion: Das Harz wird durch einen breiten Kanal injiziert, der über oder unter dem Faser-Halbzeug liegt.
- Kaskaden-Injektion: Um den Druckgradienten gering zu halten, werden mehrere Injektionsstellen in Richtung der Fließfront angebracht. Es ist dazu jedoch notwendig, die Injektionsleitungen der Fließfront folgend zu öffnen und zu schließen.

Als Formarten sind feste Formen, weiche Formen und Mischformen bekannt.

Als Injektionsharze werden Harze verwendet, die eine niedrige Viskosität besitzen. Dadurch bleibt der Strömungswiderstand beim Durchströmen der Form gering und es sind kleinere Druckdifferenzen zum Füllen notwendig. Reaktionsharze für RTM-Verfahren werden als spezielle Injektionsharze angeboten, die aus einer Harz- und Härterkomponente bestehen. Niedrigreaktive Harzsysteme können bereits vor der Infusion gemischt werden. Sollen hochreaktive Harzsysteme verwendet werden, so können Harz und Härter erst unmittelbar in der Infusionsleitung beziehungsweise der Form gemischt werden. Auf diese Weise sind geringere Taktzeiten möglich. Verfahren, bei denen die Injektionsharz-Komponenten erst unmittelbar vor der Injektion gemischt werden, sind als RIM-Verfahren (Reaction Injection Moulding) bekannt.

Weitere Details lassen sich dem Chemielexikon Römpp entnehmen, und zwar unter dem Stichwort "Spritzgießen" (2013 Georg Thieme Verlag, Dokumentkennung RD-19-03499, letzte Aktualisierung: Juli 2011).

Zum Aufbau eines Körpers, beispielsweise dem (Halb-)Flügel eines Rotors, der in einer Windkraftanlage verbaut ist, werden Glasfasermatten verwendet, die als Teilschichten in eine geeignet gestaltete Form eingebracht werden. Anschließend werden die Schichten mit einem Harz verklebt und in der Form gehärtet, um ein faserverstärktes Polymer oder einen glasfaserverstärkten Kunststoff zu ergeben.

Um ein einfaches und zerstörungsfreies Entformen zu gewährleisten, muss die Form, die den Negativ- und gegebenenfalls auch den Positivabdruck des zu bauenden Teils darstellt, mit einem anti-adhäsiven Material präpariert werden, das vor dem Aufbau der Schichten auf die Form aufgetragen wird.

Dazu werden häufig Trennmittel eingesetzt wie Polyvinylalkohol oder Silikonwachse. Bekannt sind auch Trennmittel auf Silan- oder Siloxanbasis, beispielsweise die Produkte aus der Frekote-Serie der Firma Henkel. Des Weiteren wird PTFE-beschichtetes Glasgewebe eingesetzt, das in Form eines Klebebandes auf die Form aufgebracht wird und das Trennmittel ersetzt.

Das Trennmittel ist in einer gleichmäßigen Schicht aufgebracht werden, und diese Schicht muss absolut glatt sein, damit die äußere Oberfläche des Körpers ebenfalls glatt ist.

Die üblich eingesetzten flüssigen Trennmittel sind Lösungsmittel basiert und bedürfen einer Trocken- und Aushärtezeit von jeweils 20 bis 30 min. Die Applikation des Trennmittels dauert ebenfalls 20 bis 30 min.

Da je nach Anwender vor jedem Bauzyklus erneut mit Trennmittel ausgerüstet wird, entsteht dadurch insgesamt eine Totzeit von 1,5 h vor jedem Bauzyklus.

Als weiterer Nachteil ist zu nennen, dass die Trennmittel sich teilweise auf das Bauteil übertragen, was eine direkte anschließende Weiterverarbeitung zum Beispiel durch Lackieren erschwert. Das Trennmittel muss erst entfernt werden, was ebenfalls Zeit in Anspruch nimmt.

Weiterhin ist bekannt, dass die Trennwirkung solcher Trennmittel nicht 100 %ig ist. Aufgrund der Tatsache, dass das Harz direkten Kontakt zur Form hat, lagert sich dadurch nach jedem weiteren Entformungszyklus an einigen Stellen eine geringe Menge Harz ab. Dieser Effekt summiert sich so stark, dass die Form je nach Schweregrad nach 200 Zyklen abgeschliffen und poliert werden muss, da sonst die Passgenauigkeit der entformten Bauteile nicht mehr gegeben ist.

Einige der verwendeten Trennmittel basieren auf organischen Lösungsmitteln, welche beim Trocknen verdunsten und die Umgebungsluft belasten. In bestimmten Fällen müssen dafür extra Sicherheitsvorkehrungen getroffen werden, um die Brand- oder Explosionsgefahr sowie eine Gesundheitsgefährdung zu minimieren.

Eine wenig verbreitete Alternative besteht darin, die Bauteilform mit PTFE beschichteten (Glas-)Gewebeklebebändern auszukleiden. Diese müssen je nach Qualität weniger oft ausgetauscht werden und bieten eine gute Trennwirkung. Das spart vor allem Zeit, die für weitere Produktionszyklen genutzt werden kann.

Nachteilig ist der Applikationsprozess des Gewebeklebebands in der dreidimensionalen Form, weil darauf geachtet werden muss, dass so wenig wie möglich Unregelmäßigkeiten wie Luftblasen unter dem Klebeband, überlappende Klebebandkanten oder Falten erzeugt werden.

Dies wird enorm erschwert durch die Steifigkeit und die fehlende Flexibilität des PTFE behandelten Glasgewebeträgers.

Bei der Herstellung eines PTFE beschichteten Gewebes wird üblicherweise ein sehr breiter Ballen auf der Ober- und der Unterseite mit PTFE benetzt und später in viele Rollen mit der gewünschten Breite aufgeschnitten. Dadurch ist an den Schnittkanten der Rollen kein PTFE. Dies wiederum hat zur Folge, dass sich das Gewebe und damit das Klebeband in der Form mit Flüssigharz vollsaugen und somit die Trennwirkung beziehungsweise die Zahl der Zyklen bis zum kompletten Austausch des Tapes reduziert wird.

Es gibt große qualitative Unterschiede zwischen den PTFE-behandelten Glasgewebeträgern. Kaum zu verhindern sind sogenannte Mikrorisse in der PTFE-Schicht, in die Harz eindringen kann. Je nach Qualität treten diese Risse mehr oder weniger häufig auf. Diese führen dazu, dass sich das Klebeband in der Mitte mit Harz vollsaugt, was wie im vorigen Absatz beschrieben, zu einer Reduktion der Lebenszeit führt.

Weiterhin lässt sich nicht verhindern, dass das Glasfasergewebe (so wie jedes Gewebe) an den Schnittkanten ausfranzt und einzelne Fasern in die Form stehen. Wenn das Bauteil entformt wird, führt das dazu, dass die Faser und teilweise das Klebeband mit herausgerissen werden. Eine einmal herbeigeführte Verletzung dieser Art vergrößert sich entsprechend schnell, so dass die entstehende Lücke geflickt werden muss. Die neu entstandenen Kanten sind ebenfalls empfindlich, so dass dies ein sich selbstverschlechternden Prozess darstellt.

Somit verliert auch ein mit PTFE beschichtetes Gewebeklebeband nach und nach seine Trennwirkung, so dass dieses nach zum Beispiel 30 Entformungen ausgetauscht werden muss.

Für die Hersteller von Rotorblättern ist es dabei sehr nachteilig, wenn die Klebebänder nicht aus der Form entfernt werden können, ohne dass Rückstände der Klebemasse auf der Form verbleiben.

Die rückstandsfreie Entfernbarkeit des Klebebandes ist eine der wesentlichen Anforderungen, die das Klebeband zu erfüllen hat.

Üblicherweise werden die verwendeten Klebemassen mit Silikonklebemassen ausgerüstet. Da die silikonbasierten druckempfindlichen Klebemassen teilweise stark aufziehen, treten beim Ablösen große Kräfte auf. Dabei kann sich die Klebmasse bei schlechter Verankerung vom Träger des Klebebands lösen und verbleibt dann auf der Form. Die entstehenden Rückstände müssen mühsam manuell entfernt werden.

Die Erhöhung der Verklebungsfestigkeit bei Lagerung des Klebeverbundes wird vom Fachmann Aufziehen genannt und ist durch Wechselwirkungen des Klebers mit dem Lack Untergrund bedingt.

Bei einigen Varianten des Klebebands ist die Klebmasse gut verankert, aber die PTFE-Schicht löst sich beim Entfernen des Klebebands vom Glasgewebe ab, was ebenfalls zu massiven Rückständen führt.

Obwohl die Silikonklebebänder bereits eine gute Trennwirkung haben, wird die Form vor dem Auskleiden mit Klebeband zusätzlich noch mit einer weiteren Schicht aus Trennmittel versehen, um den Schutz der Form zu optimieren. Das Trennmittel dient dann nach dem Klebeband als zweite Schutzschicht gegen eindringendes Harz, falls irgendwo ein Loch im Klebeband ist, muss aber nur einmal zu Beginn aufgebracht werden.

Dies bedeutet auch, dass das Klebeband auf einem Untergrund haften muss, auf dem ein Trennmittel aufgebracht ist. Silikonbasierte Klebmassen leisten hier einen guten Dienst, haben aber den bereits beschriebenen Nachteil, dass sie während der Lebensdauer des Tapes in der Form stark auf diese aufziehen ,was zu Rückständen oder sogar Delamination des Klebebands führen kann.

Wenn das Klebeband sehr dünn ist, reißt es beim Entfernen aufgrund der hohen Klebkräfte ab, wodurch der Austauschprozess verlangsamt wird. Wählt man ein dickeres Klebeband, reduziert man dieses Problem. Dickere Klebebänder lassen sich wiederum schlechter in 3D-Formen einbringen.

Aus der FR 2 388 658 A1 ist eine Formentrennfolie bekannt, die dadurch gekennzeichnet ist, dass auf zumindest eine Oberfläche eines selbsttragenden Thermoplastfilms eine Formentrennschicht aufgebracht wird, die aus einem filmbildenden Homopolymer eines Alkylacrylats, dessen Alkylgruppe bis zu 10 C-Atome hat, oder aus einem filmbildenden Mischpolymer zumindest eines solchen Alkylacrylats mit einem oder mehreren ethylenisch ungesättigten Comonomeren besteht.

Die WO 2015/014646 A1, Stand der Technik nach Art. 54 (3) EPÜ, offenbart ein Verfahren zum Formen eines Körpers in einer Form, umfassend die folgenden Schritte:
- Aufbringen eines Klebebands auf der Innenseite einer Form
- Verteilen der den Körper bildende Materialschichten auf dem Klebeband
- Aushärtung der Materialschichten
- Entfernen des Körpers aus der Form
wobei das Klebeband eine Trägerfolie aufweist, auf den einseitig eine Klebemasse, insbesondere Selbstklebemasse ausgebracht ist, und die Trägerfolie ein oder mindestens zwei Fluorpolymere enthält. In diesem Dokument wird auf die DE 43 13 008 C1 verwiesen,
in der eine Klebemasse beschrieben ist, in der 76 Gew.-% 2-Ethylhexylacrylat und 21 Gew.-% n-Butylacrylat enthalten sind, also insgesamt 97 Gew.-% n-Butylacrylat und/oder 2-Ethylhexylacrylat.

Aufgabe der vorliegenden Erfindung ist, ein Verfahren zum Formen eines Körpers aus aushärtbaren Materialschichten in einer Form anzugeben, das bezüglich seiner Zyklusschritte optimiert ist durch ein verbessertes Klebeband, das zwischen den Materialschichten und der Form eingesetzt wird.

Gelöst wird diese Aufgabe durch ein Verfahren, wie es im Hauptanspruch niedergelegt ist. Gegenstand der Unteransprüche sind vorteilhafte Weiterentwicklungen des Erfindungsgegenstandes.

Demgemäß betrifft die Erfindung ein Verfahren zum Formen eines Körpers in einer Form, umfassend die folgenden Schritte:
- Aufbringen eines Klebebands auf der Innenseite einer Form
- Verteilen der den Körper bildende Materialschichten auf dem Klebeband
- Aushärtung der Materialschichten
- Entfernen des Körpers aus der Form
wobei das Klebeband eine Trägerfolie aufweist, auf die einseitig eine Selbstklebemasse ausgebracht ist in Form einer Polymermischung, wobei die Polymere aufgebaut sind aus:
(a) 75 bis 94 Gew.-%, vorzugsweise 87 bis 94 Gew.-% n-Butylacrylat und/oder 2-Ethylhexylacrylat
(b) 1 bis 5 Gew.-%, vorzugsweise 1 bis 3 Gew.-% eines ethylenisch ungesättigten Monomers mit einer Säure- oder Säureanhydridfunktion
(c) 5 bis 20 Gew.-%, vorzugsweise 5 bis 10 Gew.-% eines oder von mehreren von (a) verschiedenen olefinischen Monomeren
und die Selbstklebemasse zwischen 0 bis 60 Gewichtsteile eines oder mehrerer Klebrigmacher (bezogen auf die Masse der Polymermischung) enthält.

In der Zusammensetzung der Selbstklebemasse hat die oben angegebene Polymermischung immer den höchsten Gewichtsanteil; der Gewichtsanteil eines jeden anderen Bestandteils wie beispielsweise Klebharz usw. ist stets kleiner als der Gewichtsanteil der Polymermischung. Der Gewichtsanteil des Polymers ist darüber hinaus vorteilhafterweise stets größer als die Summe der Gewichtsanteile der anderen Bestandteile (wenn ein oder mehrere Zuschlagstoffe zugesetzt werden).

Die Klebemasse ist eine Selbstklebemasse, auch als Haftklebemasse bezeichnet, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung oder Dispersion.

Gemäß einer bevorzugten Variante des Verfahrens wird vor dem Aufbringen des Klebebands die Innenseite der Form mit einem Trennmittel ausgerüstet.

Weiter vorzugsweise erfolgt das Aushärten der Materialschichten unter Vakuum.

Die einzelnen Verfahrensschritte sind beispielsweise in der EP 2 388 131 A1 umfassender erläutert.

Bevorzugt bildet eine Mischung aus 2-Ethylhexylacrylat und aus n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt sind Acrylsäure oder Methacrylsäure, gegebenenfalls die Mischung aus beiden, besonders bevorzugt Acrylsäure.

Unter Monomere (c) fallen Alkyl(meth)acrylate, bevorzugt C₁- bis C₂₀-Alkyl(meth)acrylate mit Ausnahme der (a) bildenden Monomere, C₁- bis C₁₀-Hydroxyalkyl(meth)acrylate wie insbesondere Hydroxyethyl- oder Hydroxypropyl(meth)acrylat, und ungesättigte Kohlenwasserstoffe mit 2 bis 8 Kohlenstoffatomen wie Ethylen, Propen, Butadien, Isopren, 1-Hexen oder 1-Octen.

Erfindungsgemäß besonders bevorzugt sind Isobornylacrylat, Isobornylmethacrylat, Stearylacrylat und Methylacrylat.

Die Polymerdispersion kann hergestellt werden durch das Verfahren der Emulsionspolymerisation der genannten Komponenten. Beschreibungen dieses Verfahrens werden zum Beispiel gegeben in "Emulsion Polymerization and Emulsion Polymers" von Peter A. Lovell and Mohamed S. EI-Aasser - Wiley-VCH 1997 - ISBN 0-471-96746-7 oder in EP 1 378 527 B1.

Gemäß einer weiteren bevorzugten Ausführungsform der Erfindung setzen sich die Polymere zusammen aus:
(a) 87 bis 94 Gew.-% n-Butylacrylat und/oder 2-Ethylhexylacrylat
(b) 1 bis 3 Gew.-% eines ethylenisch ungesättigten Monomers mit einer Säure- oder Säureanhydridfunktion
(c) 5 bis 10 Gew.-% eines oder von mehreren von (a) verschiedenen olefinischen Monomeren

Zur Erzielung haftklebriger Eigenschaften muss sich die Klebmasse bei der Verarbeitungstemperatur oberhalb ihrer Glastemperatur befinden, um viskoelastische Eigenschaften zu haben. Da das Einbringen in die Form bei normaler Umgebungstemperatur (ungefähr zwischen 15 °C bis 25 °C) erfolgt, liegt die Glasübergangstemperatur der Haftklebemasseformulierung (Polymer-Klebrigmachermischung) bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatpolymere lässt sich gemäß der Gleichung von Fox aus den Glasübergangstemperaturen der Homopolymere und ihren relativen Mengenverhältnissen abschätzen (vergleiche T.G. Fox, Bull. Am. Phys. Soc. 1 (1956) 123). Durch die Klebrigmacher erhöht sich die Glasübergangstemperatur zwangsläufig, je nach Zugabemenge, Verträglichkeit und Erweichungstemperatur um ca. 5 bis 40 K. Es sind demnach nur Acrylatpolymere mit einer Glasübergangstemperatur von höchstens 0 °C geeignet.

Der Einsatz von Klebrigmachern zur Steigerung der Klebkräfte von Haftklebemassen ist grundsätzlich bekannt. Es ist also für den Fachmann naheliegend, die Klebkraft durch Verwendung von Klebrigmachern zu verbessern. Genau dieser Effekt wird beobachtet, wenn der Klebmasse üblicherweise mehr als 0 bis 60 Gewichtsteile Klebrigmacher (bezogen auf die Polymermischung) hinzugefügt werden, zumeist 15 bis 50 Gewichtsteile, weiter bevorzugt 10 bis 40 Gewichtsteile.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und/oder Kolophoniumestern mit einem Erweichungspunkt oberhalb von 90 °C gemäß ASTM E28-99 (2009).

Zur Optimierung der Eigenschaften kann die zum Einsatz kommende Selbstklebemasse mit einem oder mehreren Additiven wie Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Die Additive umfassen erfindungsgemäß alles außer die erfindungsgemäßen Polymere, Klebharze und Vernetzer.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Geeignete Füllstoffe und Pigmente sind beispielsweise Ruß, Titandioxid, Calciumcarbonat, Zinkcarbonat, Zinkoxid, Silicate oder Kieselsäure.

Zur weiteren Verbesserung der Eigenschaften kann die Klebmasseformulierung optional mit Lichtschutz- und/oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Zur Verbesserung der Verarbeitungseigenschaften kann die Klebmasseformulierung weiterhin mit üblichen Prozesshilfsmitteln wie Rheologieadditiven (Verdicker), Entschäumern, Entlüftern, Netzmitteln oder Verlaufsmitteln abgemischt sein.

Die gesamte Menge der zugesetzten Additive liegt vorzugsweise zwischen 0 bis 10 Gewichtsteilen, vorzugsweise zwischen 1 bis 5 Gewichtsteilen, weiter vorzugsweise zwischen 1 bis 3 Gewichtsteilen (bezogen auf die Masse der Polymermischung).

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Die Haftklebemassen können vorteilhaft mit Metallchelaten vernetzt sein. Als Metallchelate können bevorzugt solche verwendet werden, die durch die Formel (R₁O)ₙM(XR₂Y)ₘ wiedergegeben werden können, wobei M ein Metall der 2. 3. 4. und 5. Hauptgruppe oder ein Übergangsmetall ist; R₁ eine Alkyl- oder Arylgruppe wie Methyl, Ethyl, Butyl, Isopropyl oder Benzyl ist; n null oder eine größere ganze Zahl ist, X und Y Sauerstoff oder Stickstoff sind, die jeweils auch durch eine Doppelbindung an R₂ gebunden sein können; R₂ eine X und Y verbindende Alkylengruppe ist, die verzweigt sein kann, oder auch Sauerstoff oder weitere Heteroatome in der Kette enthalten kann; m eine ganze Zahl, mindestens jedoch 1 ist. Vorteilhaft kann es sich bei dem Chelat um ein Acetylacetonat handelt, insbesondere um Aluminiumacetylacetonat.

Als Metalle der Metallchelate sind besonders geeignet zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Die gesamte Menge der zugesetzten Vernetzer liegt vorzugsweise zwischen 0 bis 1 Gewichtsteilen, vorzugsweise zwischen 0,05 bis 0,75 Gewichtsteilen, weiter vorzugsweise zwischen 0,1 bis 0,35 Gewichtsteilen (bezogen auf die Masse der Polymermischung).

Gemäß einer weiteren bevorzugten Ausführungsform der Erfindung besteht die Selbstklebemasse aus
- 100 Gewichtsteilen Polymermischung
- 0 bis 60 Gewichtsteilen, vorzugsweise 15 bis 50 Gewichtsteilen, weiter vorzugsweise 10 bis 40 Gewichtsteilen eines oder mehrerer Klebrigmacher (bezogen auf die Masse der Polymermischung)
- 0 bis 10 Gewichtsteilen, vorzugsweise zwischen 1 bis 5 Gewichtsteilen, weiter vorzugsweise zwischen 1 bis 3 Gewichtsteilen Additiven (bezogen auf die Masse der Polymermischung)
- 0 bis 1 Gewichtsteilen, vorzugsweise zwischen 0,05 bis 0,75 Gewichtsteilen, weiter vorzugsweise zwischen 0,1bis 0,35 Gewichtsteilen Vernetzer (bezogen auf die Masse der Polymermischung)

Bevorzugt sind weiterhin folgende Varianten der Selbstklebemasse:
- 100 Gewichtsteilen Polymermischung
- 10 bis 40 Gewichtsteile Klebrigmacher (bezogen auf die Masse der Polymermischung)
- 0 Gewichtsteile Additive (bezogen auf die Masse der Polymermischung)
- 0,05 bis 0,75 Gewichtsteile Vernetzer (bezogen auf die Masse der Polymermischung)
- 100 Gewichtsteilen Polymermischung
- 0 Gewichtsteile Klebrigmacher (bezogen auf die Masse der Polymermischung)
- 0 Gewichtsteile Additive (bezogen auf die Masse der Polymermischung)
- 0,05 bis 0,75 Gewichtsteile Vernetzer (bezogen auf die Masse der Polymermischung)
- 100 Gewichtsteilen Polymermischung
- 0 Gewichtsteile Klebrigmacher (bezogen auf die Masse der Polymermischung)
- 0 Gewichtsteile Additive (bezogen auf die Masse der Polymermischung)
- 0 Gewichtsteile Vernetzer (bezogen auf die Masse der Polymermischung)

Als Trägerfolie für das Klebeband können Folien wie zum Beispiel aus PUR, PE oder PP, PET, PA eingesetzt.

Beispielsweise lassen sich monoaxial und biaxial gereckte Folien auf Basis von Polyolefinen, dann Folien auf Basis von gerecktem Polyethylen oder gereckten Copolymeren, enthaltend Ethylen- und/oder Polypropyleneinheiten verwenden.

Monoaxial gerecktes Polypropylen zeichnet sich durch seine sehr hohe Reißfestigkeit und geringe Dehnung in Längsrichtung aus. Besonders bevorzugt sind monoaxial gereckte Folien auf Basis von Polypropylen.

Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Weiterhin besonders bevorzugt sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.

Besonders bevorzugt wird als Trägerfolie eine Folie eingesetzt, die ein oder mindestens zwei Fluorpolymere enthält.

Als Fluorpolymere oder fluorhaltige Polymere werden im Rahmen dieser Erfindung sowie allgemein sowohl fluorhaltige Polymere mit ausschließlich Kohlenstoffatomen als auch solche mit Heteroatomen in der Hauptkette bezeichnet. Vertreter der ersten Gruppe sind Homo- und Copolymere olefinisch-ungesättigter fluorierter Monomeren.

Die Einteilung der aus diesen Monomeren resultierenden Fluorpolymere erfolgt in die Kategorien Polytetrafluorethylen, Fluorthermoplaste, Fluorkautschuke und die daraus durch Vulkanisation gewonnenen Fluorelastomere. Wichtigste Vertreter der Fluorpolymere mit Heteroatomen in der Hauptkette sind die Polyfluorsiloxane und Polyfluoralkoxyphosphazene.

Vorzugsweise enthält die Trägerfolie zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere (jeweils bezogen auf die Gesamtzusammensetzung der Trägerfolie).

Weiter vorzugsweise bestehen die die Trägerfolie bildenden Polymere zu 100 Gew.-% aus einem oder mindestens zweien Fluorpolymeren. Den Fluorpolymeren können zusätzlich optional die später geschilderten Additive zugesetzt sein. Letztere sind - wie gesagt - nicht zwingend, sondern können auch nicht verwendet werden.

Als Fluorpolymere sind insbesondere PTFE (Polytetrafluorethylen), ETFE (Poly(ethylen-co-tetrafluoroethylen)), FEP (Poly(tetrafluorethylen-co-hexafluorpropylen)), PVDF (Poly(1,1-difluorethen)) oder PFA (Perfluoralkoxy-Polymere) geeignet oder Gemische aus zwei oder mehreren der genannten Fluorpolymere.

PTFE bezeichnet Fluorpolymere, die aus Tetrafluorethen-Monomeren zusammengesetzt sind.

ETFE ist ein fluoriertes Copolymer bestehend aus den Monomeren Chlortrifluorethylen oder auch Tetrafluorethylen und Ethylen.

FEP, auch fluoriertes Ethylen-Propylen-Copolymer genannt, bezeichnet Copolymere aus Tetrafluorethen und Hexafluorpropen.

PVF ist ein aus Vinylfluorid hergestelltes Polymer (Polyvinylfluorid).

PCTFE ist ein aus Chlortrifluorethylen aufgebautes Polymer (Polychlortrifluorethylen).

ECTFE ist ein Copolymer bestehend aus Ethylen und Chlortrifluorethylen

PVDF bezeichnet aus 1,1-Difluorethen (Vinylidenfluorid) herstellbare Fluorpolymere. PFA bezeichnet Copolymere mit Gruppierungen wie 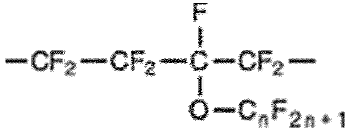 als Grundeinheiten [Poly(tetrafluorethylen-co-perfluoralkylvinylether)]. PFA resultieren aus der Copolymerisation von Tetrafluorethen und Perfluoralkoxyvinylethern (zum Beispiel Perfluorvinylpropylether, *n* = 3).

Die Fluorpolymere können mit weiteren Polymeren vermischt sein, wobei eine gute Mischbarkeit der Fluorpolymere mit den anderen Polymeren gegeben sein muss.

Geeignete Polymere sind olefinische Polymere wie Homo- oder Copolymere von Olefinen wie Ethylen, Propylen oder Butylen (der Begriff Copolymer ist hier sinngemäß dahingehend zu verstehen, dass er Terpolymere mit einschließt), Polypropylenhomopolymere oder Polypropylencopolymere einschließlich der Block-(Impact-) und Randompolymere. Weitere Polymere können allein oder in Mischung aus der Gruppe der Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide ausgewählt werden.

Die Polymere zur Bildung der Trägerfolie können in Reinform oder in Blends mit Additiven wie Antioxidantien, Lichtschutzmitteln, Antiblockmitteln, Gleit- und Verarbeitungshilfsmitteln, Füllstoffen, Farbstoffen, Pigmenten Treib- oder Nucleierungsmitteln vorliegen.

Vorzugsweise weist die Folie - mit Ausnahme von Farbstoffen - keines der genannten Additive auf. Farbstoffe werden bevorzugt eingesetzt, sind aber auch nicht zwingend vorhanden.

Gemäß einer bevorzugten Ausführungsform besteht die Trägerfolie aus einem zumindest zweischichtigen Laminat aus zwei oder mehr Folienlagen. Bevorzugt besteht die mehrschichtige Trägerfolie aus bis zu zehn Folienlagen, insbesondere aus zwei bis fünf Folienlagen.

Die äußerste Folienlage, also die, die den den Körper bildenden Materialschichten zugewandt ist, ist die ein oder mindestens zwei Fluorpolymere enthaltende Trägerfolie. Zwischen dieser Trägerfolie und der Klebemasse können weitere Folienlagen aus beliebigem Material vorhanden sein, (zum Beispiel aus Polyethylen, Polypropylen, Polyester, PA, PVC und andere Folien). Die weiteren Folienlagen können auch aus dem gleichen oder identischen Material bestehen wie die äußerste Folienlage.

Gemäß einer bevorzugten Ausführungsform der Erfindung besteht die Trägerfolie aus mindestens zwei Folienlagen, wobei die beiden äußeren Folienlagen unterschiedlich eingefärbt sind, vorzugsweise aus genau zwei.

Auf diese Weise entsteht ein einfacher, aber klar erkennbarer Verschleißnachweis. Wenn die äußerste Folienlage an einigen Stellen aufgrund des Verschleißes durchgescheuert ist, schimmert an diesen Stellen die darunter befindliche, wie erwähnt andersfarbige Folienlage durch (selbstverständlich sollten die Färbungen so gewählt werden, dass ein entsprechender Kontrast entsteht). Wenn also die untere Folienlage zu sehen ist, ist dies ein Anzeichen, dass es Zeit wird, das Klebeband auszutauschen.

Gemäß einer bevorzugten Ausführungsform liegt die Dicke der Trägerfolie zwischen 15 und 350 µm, vorzugsweise zwischen 30 und 200 µm, weiter vorzugsweise zwischen 50 und 150 µm.

Die Verankerung der erfindungsgemäßen Selbstklebemasse ist üblicherweise so stark, dass ein solches Klebeband problemlos von einer Rolle abgewickelt werden kann, ohne dass die Verankerung der Klebemasse reißt und es zum so genannten Umspulen der Klebemasse kommt (die Klebemasse befindet sich dann auf der Rückseite des Trägers). Des Weiteren wird von den meisten Haftklebebändern erwartet, dass diese vom Untergrund wieder abgelöst werden können, also möglichst spurlos wieder aufgenommen werden können. Das heißt, das Klebeband darf nicht zwischen Träger und Klebemasse adhäsiv brechen.

Gemäß einer bevorzugten Ausführungsform liegt der Masseauftrag der Klebemasse auf die Trägerfolie zwischen 10 und 200 g/m²; vorzugsweise zwischen 20 und 100 g/m², besonders vorzugsweise zwischen 30 und 75 g/m².

In einer bevorzugten Ausführungsform hat die erfindungsgemäße Klebmasseformulierung nach ASTM D3330 eine Klebkraft auf Stahl von mindestens 2,5 N/cm (bei einem Flächengewicht der Klebmasse von ca. 100 g/m² auf Polyesterfolie).

Als Materialschichten zur Bildung des Formteils wird insbesondere Fasermaterial (wie zum Beispiel GFK (glasfaserverstärkter Kunststoff), CFK (kohlenstofffaserverstärkter Kunststoff) oder Prepreg und so weiter) verwendet.

Prepeg bezeichnet ein Halbzeug, bestehend aus Endlosfasern und einer ungehärteten duroplastischen Kunststoffmatrix, das vor allem im Leichtbau Verwendung findet. Die Endlosfasern können als reine unidirektionale Schicht, als Gewebe oder Gelege vorliegen.

Zur Erhöhung der Adhäsion zwischen der Klebemasse und dem Trägermaterial oder zwischen Trennlack und Trägermaterial kann das Trägermaterial zur Erhöhung der Oberflächenenergie einer Coronabehandlung unterzogen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Des Weiteren ist ein Ätzen der Folie vorteilhaft, um die Klebemasse verankern zu können.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig - falls gewünscht, wenn auch nicht erforderlich - eingedeckt mit Trennmaterialien wie silikonisiertem Papier oder silikonisierter Folie hergestellt werden.

Als Trennmaterial eignet sich bevorzugt ein nicht-fusselndes Material wie eine Kunststofffolie oder ein gut verleimtes, langfaseriges Papier.

Die Klebebänder weisen insbesondere Lauflängen von 1000 bis 30.000 m auf. Als Breite der Rollen werden üblicherweise 100 bis 1000 mm gewählt.

Überraschend ist die Tatsache, dass auch Acrylatmassen eine sehr gute Balance aus Verklebungsfestigkeit und rückstandsfreier Ablösbarkeit bieten. Es ist bekannt, dass Acrylatklebemassen unter normalen Bedingungen nur eine sehr schlechte Haftung auf unpolaren Untergründen (zum Beispiel Releasematerialien) haben. Diese minimale Haftung auf der eingedeckten Form genügt allerdings, um zum Beispiel die Form mit Glas- und/oder Carbonfasermatten usw. zu präparieren, bevor der gesamte Aufbau am Rand mit Folie versiegelt und anschließend evakuiert wird.

Während des ersten Bauzyklus bildet sich dann gerade genügend Haftung aus, dass das Klebeband bei der Entformung des Bauteils nicht herausgerissen wird.

Die so aufgebaute Haftung verstärkt sich in den nachfolgenden Zyklen noch geringfügig, so dass das Klebeband sicher haftet und am Ende seiner Lebensdauer in der Form ohne Probleme aus dieser herausgelöst werden kann, ohne dass Rückstände zurückbleiben.

Es hat sich gezeigt, dass ein Zusammenspiel von Gehalt an Acrylsäure, Vernetzungsgrad der Polymerketten und Glasübergangstemperatur des Polymers eine entscheidende Rolle für die Verklebungsfestigkeit spielen.

Tendenziell nimmt die Klebkraft auf unpolaren Untergründen mit abnehmendem Gehalt an Acrylsäure aufgrund der Polaritätserniedrigung zu. Demnach ist die Klebkraft bei einem Polymer mit 12 Gew.-% Acrylsäure deutlich niedriger als die mit 1 Gew.-% Acrylsäure. Mit dem Acrylsäuregehalt Hand in Hand geht die Glasübergangstemperatur. Da Acrylsäure eine sehr hohe Glasübergangstemperatur aufweist, sinkt demzufolge die Gesamt-Glasübergangstemperatur des Polymers mit kleiner werdendem Acrylsäuregehalt. Eine niedrigere Glasübergangstemperatur bedingt eine deutlich weichere Masse und ermöglicht ein deutlich besseres Auffließen dieser. Daraus resultierend steigen natürlich die Abzugskräfte.

Ein weiterer, wichtiger Punkt ist die Vernetzung der Polymerketten. Es zeigt sich, dass Polymere, die sowieso schon über wenig Acrylsäure verfügen und zusätzlich vernetzt werden, gute Klebkräfte auf unpolaren Untergründen besitzen. Dadurch, dass die Vernetzung über Acrylsäuregruppen geschieht, stehen weniger Acrylsäuregruppen zur Verfügung, die a) das Polymer polarer machen und b) die Glasübergangstemperatur heraufsetzen.

Weiterhin sind die Abrollkräfte beim Abrollen des Klebebands deutlich niedriger als im Fall von Silikonklebmassen. Da meist Klebebandbreiten zwischen 100 bis 1000 mm eingesetzt werden, um eine Form auszukleiden, ist das ein entscheidender Faktor, wenn die Abrollkräfte möglichst niedrig liegen. Alternativ werden im Fall von Silikonklebmassen Klebebänder mit einem Trennliner eingesetzt, welcher vorher entfernt werden muss (Zeitfaktor) und als Abfall anfällt.

Dadurch, dass Acrylatmassen nicht so stark aufziehen, liegt auch die benötigte Kraft zum Entfernen des Klebebands deutlich niedriger.

Ein folienartiger Träger, der vollständig oder zu mindestens 50 Gew.-% aus fluoriertem Polymer besteht, zeigt weiterhin nicht die oben beschriebenen Nachteile des Ausfransens durch Glasfasern oder Gewebe. Auch die Steifigkeit eines solchen Klebebands ist viel niedriger, und es passt sich deshalb gut an die Form an. Das Trägermaterial zeigt eine gewisse Dehnbarkeit, die zusätzlich bei der Anpassung an die Form hilft.

Weiterhin ist die innere Festigkeit eines solchen Trägermaterials deutlich höher, so dass auch bei größeren auftretenden Kräften kein Abspalten von Tragerteilen zu beobachten ist.

Im Folgenden wird die Erfindung anhand mehrerer Beispiele näher erläutert, ohne auch hiermit dieselbe in irgendeiner Art und Weise einschränken zu wollen.

### Beispiele

Es wurden mehrere lösungsmittelbasierte Polymerdispersionen mit folgender Monomerzusammensetzung zu Selbstklebemassen verarbeitet. Die Angaben bei den Monomeren 2-Ethylhexylacrylat, Butylacrylat, Acrylsäure, Isobornylacrylat, Stearylacrylat und Methylacrylat sind jeweils Gew.-%. Vernetzer und Klebharze sind in Gewichtsteilen bezogen auf die Masse der Polymermischung angegeben.

| **Monomer Vernetzer Klebharz** | **Klebemasse 1** | **Klebemasse 2** | **Klebemasse 3** | **Klebemasse 4** | **Klebemasse 5** | **Klebemasse 6** | **Klebemasse 7** | **Klebemasse 8** | **Klebemasse 9** | **Klebemasse 10** |
|---|---|---|---|---|---|---|---|---|---|---|
| 2-Ethylhexylacrylat [Gew.-%] | 49 | 70 | | 78 | 47 | 47 | 90 | 42 | 49 | 49 |
| Butylacrylat [Gew.-%] | 49 | | 69 | 18 | 47 | 47 | | 42 | 49 | 49 |
| Acrylsäure [Gew.-%] | 2 | 2 | 3 | 4 | 6 | 6 | 2 | 4 | 2 | 2 |
| Isobornylacrylat [Gew.-%] | | 28 | | | | | | | | |
| Stearylacrylat [Gew.-%] | | | 18 | | | | 8 | | | |
| Methylacrylat [Gew.-%] | | | | | | | | 12 | | |
| Al-Chelat [Gew.-Teile] | 0,75 | | | 0,35 | | | | | | |
| Erisys GA240 [Gew.-Teile] | | 0,05 | 0,05 | | 0,075 | 0,05 | 0,075 | | | |
| S610 [Gew.-Teile] | | | | | | | | | 0,1 | |
| Klebharz [Gew.-Teile] | | | | | 40 | 10 | | 30 | | |

Sylvares TP 95® ist ein Terpenphenolharz, Erweichungstemperatur 92 bis 98 °C (typischer Wert 95 °C; Herstellerangabe) (Arizona Chemical)

ERISYS GA-240 ist eine tetrafunktionales Epoxid, basierend auf Tetraglycidyl meta-Xylenediamin (CAS Nummer: 63738-22-7)

S610 ist ein tetrafunktionales Epoxid auf aliphatischer Basis (CAS Nummer: 65992-66-7).

Es werden jeweils 50 g/m² der in der Tabelle angegebenen Klebemassen auf einen 100 µm PTFE-Träger (NORTON® 124 Sintered Extruded PTFE Film) aufgebracht, wobei die Aktivierung des Trägers durch ein übliches Ätzverfahren erfolgt.

Alternativ wird ein 150 µm PTFE-beschichtetes Glasgewebe mit 50 g/m² der in der Tabelle angegebenen Klebemassen, wobei die Aktivierung des Trägers wieder durch ein übliches Ätzverfahren erfolgt.

Die Klebemassen 1 bis 6 sowie 9 und 10 sind Vergleichsbeispiele.

### Gegenbeispiel 1

- 50 g/m² Silikonklebemasse (Dow Corning® Q2-7406)
- 100 µm PTFE-Träger (NORTON® 124 Sintered Extruded PTFE Film) (Träger)
- Aktivierung des Trägers (durch übliches Ätzverfahren)

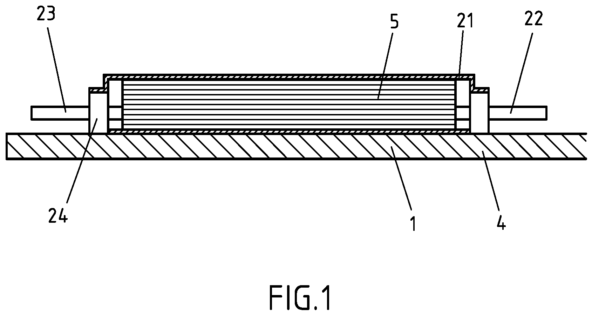

Die Klebebänder werden dazu in eine mit einem üblichen Trennmittel, zum Beispiel Frekote NC 44 (ein Trennmittel enthaltend eine Mischung aus Dibutylether und Polydimethylsiloxan (PDMS), was ein Gemisch aus vollständig methylierten linearen Siloxan-Polymeren mit endständigen Trimethylsiloxat-Einheiten ist) oder ME 143 der Firma Miller Stephenson (ein lösungsmittelbasierte Suspension von niedermolekularem PTFE) ausgerüstete Form eingeklebt. Entsprechend der Figur 1 werden mehrere Bauzyklen durchgeführt. Die Temperatur während des Aushärtens beträgt 80 bis 90 °C. Das Vakuum beträgt 0,1 bar. Es werden bis zu zehn Bauzyklen simuliert.

Die erfindungsgemäßen Klebebänder lassen sich auch nach mehreren Entformungsschritten nahezu rückstandsfrei vom Untergrund ablösen und zeigen über die gesamte Zeit eine gute Trennwirkung.

Beim Glasgewebeträger ist nach mehr als 30 Zyklen ein Spalten des Trägers in z-Richtung zu beobachten, das heißt, der Träger spaltet in sich, und es bleibt teilweise eine Schicht PTFE auf der Oberfläche zurück, die sich nur schwer entfernen lässt. Diese lange Standzeit ist aber im normalen Betrieb vollkommen ausreichend.

Im Fall des Gegenbeispiels beobachtet man beim Ablösen des Klebebands bereits nach dem ersten Zyklus Rückstände von Klebmasse auf der Form. Nach drei bis fünf Zyklen sind diese Rückstände so stark, dass diese behandelt werden müssen.

Im Folgenden soll das erfindungsgemäße Verfahren anhand mehrerer Figuren beispielhaft näher erläutert werden, ohne die Erfindung auf diese Ausführungsformen zu beschränken.

Es zeigen:
- Figur 1: die Anordnung der einzelnen Schichten in der Form im seitlichen Schnitt,
- Figur 2: die Anordnung der einzelnen Schichten in der Form von oben und
- Figur 3: einen vereinfachten Detailausschnitt der Figur 1.

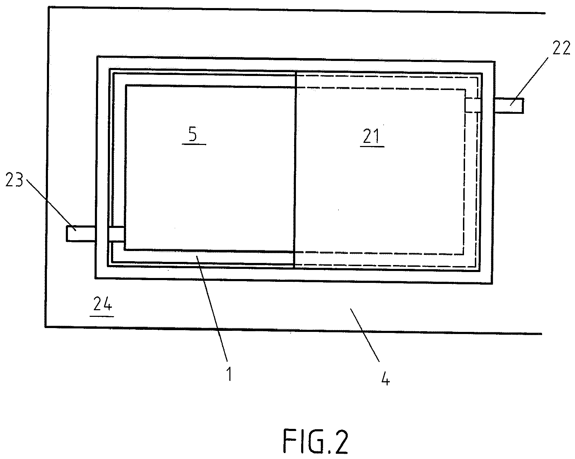

In der Figur 1 ist die Anordnung der einzelnen Schichten in der Form im seitlichen Schnitt dargestellt, in der Figur 2 von oben.

Die Form 4 wird mit einer sehr dünnen, wenige µm dicke Schicht eines Trennmittels 6, zum Beispiel einer lösungsmittelbasierten Suspension von niedermolekularem PTFE, ausgerüstet, deren Dicke in der Figur 1 nicht im richtigen Verhältnis gezeigt ist. Der Auftrag erfolgt mit einem Lappen. Danach trocknet die Suspension, woraus ein sehr dünner Film resultiert. Anschließend wird das Klebeband 1 in einer Lage auf der Innenseite der Form 4 aufgebracht.

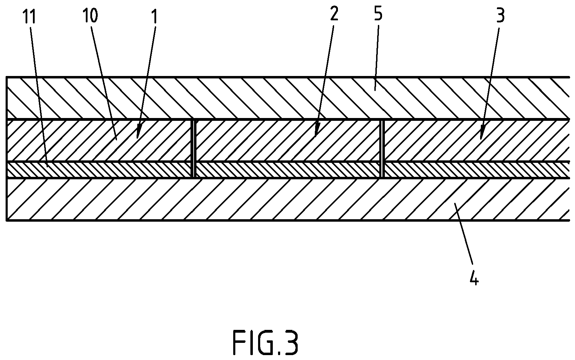

In der Figur 3 ist gezeigt, dass die Kanten der einzelnen Streifen des Klebebands 1, 2 ,3 stoß an stoß liegen, also keine Zwischenräume aufweisen. Die einzelnen Klebebandabschnitte 1, 2, 3 bestehen aus einer Trägerfolie 10, auf die eine Klebemassenschicht 11 aufgebracht ist.

Nach dem Verkleben des Klebebands 1 werden die den Körper bildende Materialschichten 5 auf dem Klebeband verteilt.

Anschließend wird eine Dichtfolie 21 so über dem Material 5 mit Hilfe eines zweiten Klebebands 24 fixiert, dass sich ein abgeschlossener Raum ergibt.

In der Figur 2 ist die Schutzfolie 21 nur zur Hälfte gezeigt. Die Schutzfolie 21 wird von dem zweiten Klebeband 24 auf der Form 4 fixiert.

Durch einen Abgang 22 wird die Luft entfernt. Über einen Zugang 23 wird das Harz den Materialschichten 5 zugeführt, bis diese getränkt sind.

Es erfolgt der Aushärtungsprozeß.

Wenn dieser abgeschlossen ist, wird die Dichtfolie 21 entfernt und der fertige Formkörper kann der Form 4 entnommen werden.

## Patentansprüche

1. Verfahren zum Formen eines Körpers in einer Form (4), umfassend die folgenden Schritte:
• Aufbringen eines Klebebands (1) auf der Innenseite einer Form (4)
• Verteilen der den Körper bildende Materialschichten auf dem Klebeband (1)
• Aushärtung der Materialschichten
• Entfernen des Körpers aus der Form (4)
wobei das Klebeband (1) eine Trägerfolie (10) aufweist, auf die einseitig eine Selbstklebemasse (11) ausgebracht ist in Form einer Polymermischung,
**dadurch gekennzeichnet, dass** die Polymere aufgebaut sind aus:
(a) 75 bis 94 Gew.-%, vorzugsweise 87 bis 94 Gew.-% n-Butylacrylat und/oder 2-Ethylhexylacrylat
(b) 1 bis 5 Gew.-%, vorzugsweise 1 bis 3 Gew.-% eines ethylenisch ungesättigten Monomers mit einer Säure- oder Säureanhydridfunktion
(c) 5 bis 20 Gew.-%, vorzugsweise 5 bis 10 Gew.-% eines oder von mehreren von (a) verschiedenen olefinischen Monomeren
und die Selbstklebemasse (11) zwischen 0 bis 60 Gewichtsteile eines oder mehrerer Klebrigmacher bezogen auf die Masse der Polymermischung enthält.

2. Verfahren nach Anspruch 1,
**dadurch gekennzeichnet, dass**
eine Mischung aus 2-Ethylhexylacrylat und aus n-Butylacrylat das Monomer (a) bildet.

3. Verfahren nach Anspruch 1 oder 2,
**dadurch gekennzeichnet, dass**
das Monomer (b) Acrylsäure, Methacrylsäure, Itaconsäure, Maleinsäure, Fumarsäure und/oder Maleinsäureanhydrid ist, bevorzugt Acrylsäure oder Methacrylsäure oder die Mischung aus beiden, besonders bevorzugt Acrylsäure.

4. Verfahren nach zumindest einem der Ansprüche 1 bis 3,
**dadurch gekennzeichnet, dass**
die Monomere (c) Alkyl(meth)acrylate, bevorzugt C₁- bis C₂₀-Alkyl(meth)acrylate mit Ausnahme der (a) bildenden Monomere, C₁- bis C₁₀-Hydroxyalkyl(meth)acrylate wie insbesondere Hydroxyethyl- oder Hydroxypropyl(meth)acrylat, und ungesättigte Kohlenwasserstoffe mit 2 bis 8 Kohlenstoffatomen wie Ethylen, Propen, Butadien, Isopren, 1-Hexen oder 1-Octen bilden, bevorzugt Isobornylacrylat, Isobornylmethacrylat, Stearylacrylat und Methylacrylat.

5. Verfahren nach zumindest einem der vorherigen Ansprüche,
**dadurch gekennzeichnet, dass**
die Polymere aufgebaut sind aus
a) 87 bis 94 Gew.-% n-Butylacrylat und/oder 2-Ethylhexylacrylat
b) 1 bis 3 Gew.-% eines ethylenisch ungesättigten Monomers mit einer Säure- oder Säureanhydridfunktion
c) 5 bis 10 Gew.-% eines oder von mehreren von (a) verschiedenen olefinischen Monomeren

6. Verfahren nach zumindest einem der vorherigen Ansprüche,
**dadurch gekennzeichnet, dass**
die Selbstklebemasse (11) zwischen 15 bis 50 Gewichtsteile, vorzugsweise zwischen 10 bis 40 Gewichtsteile eines oder mehrerer Klebrigmacher bezogen auf die Masse der Polymermischung enthält

7. Verfahren nach zumindest einem der vorherigen Ansprüche,
**dadurch gekennzeichnet, dass**
als Trägerfolie (10) Folien aus PUR, PE oder PP, PET, PA eingesetzt werden.

8. Verfahren nach zumindest einem der vorherigen Ansprüche,
**dadurch gekennzeichnet, dass**
die Trägerfolie (10) ein oder mindestens zwei Fluorpolymere enthält.

9. Verfahren nach zumindest einem der vorherigen Ansprüche,
**dadurch gekennzeichnet, dass**
die Trägerfolie (10) zu 50 Gew.-%, weiter vorzugsweise zu 75 Gew.-%, besonders vorzugsweise zu 90 Gew.-%, ganz besonders vorzugsweise zu 95 Gew.-% ein oder mindestens zwei Fluorpolymere jeweils bezogen auf die Gesamtzusammensetzung der Trägerfolie enthält oder die die Trägerfolie (10) bildenden Polymere zu 100 Gew.-% aus einem oder mindestens zweien Fluorpolymeren bestehen.

10. Verfahren nach Anspruch 8 oder 9,
**dadurch gekennzeichnet, dass**
als Fluorpolymere PTFE (Polytetrafluorethylen), ETFE (Poly(ethylen-co-tetrafluoroethylen)), FEP (Poly(tetrafluorethylen-co-hexafluorpropylen)), PVF (Polyvinylfluorid), PCTFE (Polychlortrifluorethylen), ECTFE (Poly(ethylen-co-chlortrifluorethylen), PVDF (Poly(1,1-difluorethen)) oder PFA (Perfluoralkoxy-Polymere) oder Gemische aus zwei oder mehreren der genannten Fluorpolymere eingesetzt werden.

11. Verfahren nach zumindest einem der Ansprüche 8 bis 10,
vorherigen Ansprüche,
**dadurch gekennzeichnet, dass**
die Fluorpolymere mit weiteren Polymeren vermischt sind wie olefinische Polymere wie Homo- oder Copolymere von Olefinen wie Ethylen, Propylen oder Butylen, Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide.

12. Verfahren nach zumindest einem der vorherigen Ansprüche,
**dadurch gekennzeichnet, dass**
die Dicke der Trägerfolie (10) zwischen 15 und 350 µm, vorzugsweise zwischen 30 und 200 µm, weiter vorzugsweise zwischen 50 und 150 µm liegt.

13. Verfahren nach zumindest einem der vorherigen Ansprüche,
**dadurch gekennzeichnet, dass**
die Trägerfolie (10) aus einem zumindest zweischichtigen Laminat aus zwei oder mehr Folienlagen besteht, vorzugsweise aus bis zu zehn Folienlagen, besonders vorzugsweise aus zwei bis fünf Folienlagen.

14. Verfahren nach zumindest einem der vorherigen Ansprüche,
**dadurch gekennzeichnet, dass**
die Trägerfolie (10) aus mindestens zwei Folienlagen besteht, wobei die beiden äußeren Folienlagen unterschiedlich eingefärbt sind, vorzugsweise aus genau zwei.

15. Verfahren nach zumindest einem der vorherigen Ansprüche,
**dadurch gekennzeichnet, dass**
der Masseauftrag der Klebemasse(11) auf die Trägerfolie (10) zwischen 10 und 200 g/m²; vorzugsweise zwischen 20 und 100 g/m², besonders vorzugsweise zwischen 30 und 75 g/m² beträgt.

16. Verfahren nach zumindest einem der vorherigen Ansprüche,
**dadurch gekennzeichnet, dass**
vor dem Aufbringen des Klebebands (1) die Innenseite der Form (4) mit einem Trennmittel ausgerüstet wird.

17. Verfahren nach zumindest einem der vorherigen Ansprüche,
**dadurch gekennzeichnet, dass**
das Aushärten der Materialschichten unter Vakuum stattfindet.

## Claims

1. Method for molding a body in a mold (4), comprising the following steps:
• application of an adhesive tape (1) to the inside of a mold (4),
• distribution of the material layers forming the body on the adhesive tape (1),
• curing of the material layers, and
• removal of the body from the mold (4),
wherein the adhesive tape (1) has a carrier film (10), on one side of which a self-adhesive compound (11) is applied in the form of a polymer mixture,
**characterized in that** the polymers are composed of the following:
(a) 75 to 94 wt.%, preferably 87 to 94 wt.%, of n-butyl acrylate and/or 2-ethylhexyl acrylate,
(b) 1 to 5 wt.%, preferably 1 to 3 wt.%, of an ethylenically unsaturated monomer with an acid or acid anhydride functional group, and
(c) 5 to 20 wt.%, preferably 5 to 10 wt.%, of one or a plurality of (a) various olefin monomers,
and the self-adhesive compound (11) contains 0 to 60 parts by weight of one or a plurality of tackifiers, based on the mass of the polymer mixture.

2. Method according to Claim 1,
**characterized in that**
a mixture of 2-ethylhexyl acrylate and n-butyl acrylate constitutes monomer (a).

3. Method according to Claim 1 or 2,
**characterized in that**
monomer (b) is acrylic acid, methacrylic acid, itaconic acid, maleic acid, fumaric acid and/or maleic acid anhydride, preferably acrylic acid or methacrylic acid or a mixture of the two, and particularly preferably acrylic acid.

4. Method according to at least one of Claims 1 to 3,
**characterized in that**
the monomers (c) form alkyl(meth)acrylates, preferably C₁ to C₂₀ alkyl(meth)acrylates other than the monomers forming (a), C₁ to C₁₀ hydroxyalkyl(meth)acrylates such as in particular hydroxyethyl or hydroxypropyl(meth)acrylate, and unsaturated hydrocarbons with 2 to 8 carbon atoms, such as ethylene, propene, butadiene, isoprene, 1-hexene, or 1-octene, and preferably isobornyl acrylate, isobornyl methacrylate, stearyl acrylate, and methyl acrylate.

5. Method according to at least one of the preceding claims,
**characterized in that**
the polymers are composed of
a) 87 to 94 wt.% of n-butyl acrylate and/or 2-ethylhexyl acrylate,
b) 1 to 3 wt.% of an ethylenically unsaturated monomer with an acid or acid anhydride functional group, and
c) 5 to 10 wt.% of one or a plurality of (a) various olefin monomers.

6. Method according to at least one of the preceding claims,
**characterized in that**
the self-adhesive compound (11) contains 15 to 50 parts by weight, and preferably 10 to 40 parts by weight of one or a plurality of tackifiers (based on the mass of the polymer mixture).

7. Method according to at least one of the preceding claims,
**characterized in that**
films composed of PUR, PE or PP, PET, PA are used as carrier films (10).

8. Method according to at least one of the preceding claims,
**characterized in that**
the carrier film (10) contains one or at least two fluoropolymers.

9. Method according to at least one of the preceding claims,
**characterized in that**
the carrier film (10) contains up to 50 wt.%, more preferably up to 75 wt.%, particularly preferably up to 90 wt.%, and most preferably up to 95 wt.% of one or at least two fluoropolymers, based in each case on the total composition of the carrier film, or the polymers making up the carrier film (10) are composed up to 100 wt.% of one or at least two fluoropolymers.

10. Method according to Claim 8 or 9,
**characterized in that**
as fluoropolymers, PTFE (polytetrafluoroethylene), ETFE (poly(ethylene-co-tetrafluoroethylene)), FEP (poly(tetrafluoroethylene-co-hexafluoropropylene)), PVF (polyvinyl fluoride), PCTFE (polychlorotrifluoroethylene), ECTFE (poly(ethylene-co-chlorotrifluoroethylene), PVDF (poly(1,1-difluoroethene)), PFA (perfluoroalkoxy polymers), or mixtures of two or more of the aforementioned fluoropolymers are used.

11. Method according to at least one of Claims 8 to 10, **characterized in that**
the fluoropolymers are mixed with further polymers, e.g. olefin polymers such as homo- or copolymers of olefins such as ethylene, propylene, or butylene, polyesters such as in particular polyethylene terephthalate (PET), polyamide, polyurethane, polyoxymethylene, polyvinyl chloride (PVC), polyethylene naphthalate (PEN), ethylene vinyl alcohol (EVOH), polyvinylidene chloride (PVDC), polyvinylidene fluoride (PVDF), polyacrylonitrile (PAN), polycarbonate (PC), polyamide (PA), polyether sulfone (PES), polyimide (PI), polyarylene sulfide and/or polyarylene oxide.

12. Method according to at least one of the preceding claims,
**characterized in that**
the thickness of the carrier film (10) is 15 to 350 µm, preferably 30 to 200 µm, and more preferably 50 to 150 µm.

13. Method according to at least one of the preceding claims,
**characterized in that**
the carrier film (10) is composed of an at least two-layered laminate comprising two or more film layers, preferably up to ten film layers, and particularly preferably two to five film layers.

14. Method according to at least one of the preceding claims,
**characterized in that**
the carrier film (10) is composed of at least two film layers, wherein the two outer film layers are of different colors, and preferably of exactly two.

15. Method according to at least one of the preceding claims,
**characterized in that**
the mass of the adhesive compound (11) applied to the carrier film (10) is 10 to 200 g/m²; preferably 20 to 100 g/m², and particularly preferably 30 to 75 g/m².

16. Method according to at least one of the preceding claims,
**characterized in that**
the inside of the mold (4) is equipped with a release agent before application of the adhesive tape (1).

17. Method according to at least one of the preceding claims,
**characterized in that**
curing of the material layers is carried out in a vacuum.

## Revendications

1. Procédé de moulage d'un corps dans un moule (4), comprenant les étapes suivantes :
- l'application d'une bande adhésive (1) sur le côté intérieur d'un moule (4),
- la répartition des couches de matériau formant le corps sur la bande adhésive (1),
- le durcissement des couches de matériau,
- l'extraction du corps à partir du moule (4),
la bande adhésive (1) comprenant un film support (10), sur lequel une masse auto-adhésive (11) est appliquée d'un côté sous la forme d'un mélange de polymères,
**caractérisé en ce que** les polymères sont formés par :
(a) 75 à 94 % en poids, de préférence 87 à 94 % en poids, d'acrylate de n-butyle et/ou d'acrylate de 2-éthylhexyle,
(b) 1 à 5 % en poids, de préférence 1 à 3 % en poids, d'un monomère éthyléniquement insaturé comprenant une fonction acide ou anhydride d'acide,
(c) 5 à 20 % en poids, de préférence 5 à 10 % en poids, d'un ou de plusieurs monomères oléfiniques différents de (a),
et la masse auto-adhésive (11) contient 0 à 60 parties en poids d'un ou de plusieurs agents collants par rapport à la masse du mélange de polymères.

2. Procédé selon la revendication 1, **caractérisé en ce qu'**un mélange d'acrylate de 2-éthylhexyle et d'acrylate de n-butyle forme le monomère (a).

3. Procédé selon la revendication 1 ou 2, **caractérisé en ce que** le monomère (b) est l'acide acrylique, l'acide méthacrylique, l'acide itaconique, l'acide maléique, l'acide fumarique et/ou l'anhydride de l'acide maléique, de préférence l'acide acrylique ou l'acide méthacrylique, ou le mélange des deux, de manière particulièrement préférée l'acide acrylique.

4. Procédé selon au moins l'une quelconque des revendications 1 à 3, **caractérisé en ce que** les monomères (c) forment des (méth)acrylates d'alkyle, de préférence des (méth)acrylates d'alkyle en C₁ à C₂₀ à l'exception des monomères formant (a), des (méth)acrylates d'hydroxyalkyle en C₁ à C₁₀, tels que notamment le (méth)acrylate d'hydroxyéthyle ou d'hydroxypropyle, et des hydrocarbures insaturés contenant 2 à 8 atomes de carbone, tels que l'éthylène, le propène, le butadiène, l'isoprène, le 1-hexène ou le 1-octène, de préférence l'acrylate d'isobornyle, le méthacrylate d'isobornyle, l'acrylate de stéaryle et l'acrylate de méthyle.

5. Procédé selon au moins l'une quelconque des revendications précédentes, **caractérisé en ce que** les polymères sont formés par :
a) 87 à 94 % en poids d'acrylate de n-butyle et/ou d'acrylate de 2-éthylhexyle,
b) 1 à 3 % en poids d'un monomère éthyléniquement insaturé comprenant une fonction acide ou anhydride d'acide,
c) 5 à 10 % en poids d'un ou de plusieurs monomères oléfiniques différents de (a).

6. Procédé selon au moins l'une quelconque des revendications précédentes, **caractérisé en ce que** la masse auto-adhésive (11) contient 15 à 50 parties en poids, de préférence 10 à 40 parties en poids, d'un ou de plusieurs agents collants, par rapport à la masse du mélange de polymères.

7. Procédé selon au moins l'une quelconque des revendications précédentes, **caractérisé en ce que** des films en PUR, PE ou PP, PET, PA sont utilisés en tant que film support (10).

8. Procédé selon au moins l'une quelconque des revendications précédentes, **caractérisé en ce que** le film support (10) contient un ou au moins deux polymères fluorés.

9. Procédé selon au moins l'une quelconque des revendications précédentes, **caractérisé en ce que** le film support (10) contient jusqu'à 50 % en poids, de manière davantage préférée jusqu'à 75 % en poids, manière particulièrement préférée jusqu'à 90 % en poids, de manière tout particulièrement préférée jusqu'à 95 % en poids, d'un ou d'au moins deux polymères fluorés, à chaque fois par rapport à la composition totale du film support, ou les polymères formant le film support (10) sont constitués par jusqu'à 100 % en poids d'un ou d'au moins deux polymères fluorés.

10. Procédé selon la revendication 8 ou 9, **caractérisé en ce que** du PTFE (polytétrafluoroéthylène), de l'ETFE (poly(éthylène-co-tétrafluoroéthylène)), du FEP (poly(tétrafluoroéthylène-co-hexafluoropropylène)), du PVF (polyfluorure de vinyle), du PCTFE (polychlorotrifluoroétylène), de l'ECTFE (poly(éthylène-co-chlorotrifluoroéthylène), du PVDF (poly(1,1-difluoroéthène)) ou du PFA (polymères perfluoroalcoxy) ou des mélanges de deux ou davantage des polymères fluorés cités sont utilisés en tant que polymères fluorés.

11. Procédé selon au moins l'une quelconque des revendications 8 à 10, **caractérisé en ce que** les polymères fluorés sont mélangés avec d'autres polymères, tels que des polymères oléfiniques, tels que des homo- ou copolymères d'oléfines telles que l'éthylène, le propylène ou le butylène, des polyesters tels que notamment le polyéthylène téréphtalate (PET), des polyamides, des polyuréthanes, du polyoxyméthylène, du polychlorure de vinyle (PVC), du polyéthylène naphtalate (PEN), de l'éthylène-alcool vinylique (EVOH), du polychlorure de vinylidène (PVDC), du polyfluorure de vinylidène (PVDF), du polyacrylonitrile (PAN), du polycarbonate (PC), du polyamide (PA), de la polyéther-sulfone (PES), du polyimide (PI), des polysulfures d'arylène et/ou des polyoxydes d'arylène.

12. Procédé selon au moins l'une quelconque des revendications précédentes, **caractérisé en ce que** l'épaisseur du film support (10) est comprise entre 15 et 350 µm, de préférence entre 30 et 200 µm, de manière davantage préférée entre 50 et 150 µm.

13. Procédé selon au moins l'une quelconque des revendications précédentes, **caractérisé en ce que** le film support (10) est constitué par un stratifié au moins bicouche de deux couches de film ou davantage, de préférence de jusqu'à dix couches de film, de manière particulièrement préférée de deux à cinq couches de film.

14. Procédé selon au moins l'une quelconque des revendications précédentes, **caractérisé en ce que** le film support (10) est constitué par au moins deux couches de film, les deux couches de film extérieures étant colorées différemment, de préférence par exactement deux.

15. Procédé selon au moins l'une quelconque des revendications précédentes, **caractérisé en ce que** la masse appliquée de la masse adhésive (11) sur le film support (10) est comprise entre 10 et 200 g/m², de préférence entre 20 et 100 g/m², de manière particulièrement préférée entre 30 et 75 g/m².

16. Procédé selon au moins l'une quelconque des revendications précédentes, **caractérisé en ce que** le côté intérieur du moule (4) est équipé d'un agent de séparation avant l'application de la bande adhésive (1).

17. Procédé selon au moins l'une quelconque des revendications précédentes, **caractérisé en ce que** le durcissement des couches de matériau a lieu sous vide.
